# EUROPEAN PATENT SPECIFICATION

(11) **EP 3 576 331 B1**
(45) Date of publication and mention of the grant of the patent: **31.01.2024**
(21) Application number: 18744848.5
(22) Date of filing: 24.01.2018
(51) Int. Cl.: H04L 5/00, H04W 72/04, H04B 10/00, H04J 14/00, H04J 14/02, H04L 5/14, H04Q 11/00, H04W 72/12

(54) **DATA TRANSMISSION METHOD AND DEVICE, AND STORAGE MEDIUM**
DATENÜBERTRAGUNGSVERFAHREN UND -VORRICHTUNG SOWIE SPEICHERMEDIUM
PROCÉDÉ ET DISPOSITIF DE TRANSMISSION DE DONNÉES, ET SUPPORT DE STOCKAGE

(30) Priority: 24.01.2017 CN 201710062797
(43) Date of publication of application: 04.12.2019
(73) Proprietor: ZTE Corporation, Shenzhen, Guangdong 518057 (CN)
(72) Inventor: CHEN, Lei, Shenzhen Guangdong 518057 (CN); HUANG, Xingang, Shenzhen Guangdong 518057 (CN); HE, Jiangyan, Shenzhen Guangdong 518057 (CN); LI, Yufeng, Shenzhen Guangdong 518057 (CN); LI, Mingsheng, Shenzhen Guangdong 518057 (CN)
(74) Representative: Tiburzi, Andrea
(86) International application number: PCT/CN2018/074068
(87) International publication number: WO 2018/137674

(56) References cited:
- CN-A- 101 018 311
- CN-A- 101 237 293
- CN-A- 101 729 873
- CN-A- 103 209 026
- US-A1- 2014 199 074
- INTERDIGITAL COMMUNICATIONS: "Scheduling-based URLLC and eMBB multiplexing", 3GPP DRAFT; R1-1700722 SCHEDULING-BASED URLLC AND EMBB MULTIPLEXING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG1, no. Spokane, USA; 20170116 - 20170120 16 January 2017 (2017-01-16), XP051208246, Retrieved from the Internet: URL:http://www.3gpp.org/ftp/Meetings_3GPP_ SYNC/RAN1/Docs/ [retrieved on 2017-01-16]

## Description

### TECHNICAL FIELD

The present application relates to communications and, in particular, to a data transmission method and device, and a storage medium.

### BACKGROUND

With the development of the Internet, Internet of Things applications such as Internet of Vehicles, smart healthcare, smart home have been widely applied, mobile communication is not only limited to communications among people, but also moves forward to communications between people and things and between things and things, and then the internet of everything will become an inexorable trend. At present, Narrow Band Internet of Things (NB-IOT) based on cellular has become an important branch of the internet of everything. As an evolution technology of LTE, 4.5G wireless network also means more connection number based on the cellular Internet of Things, and supports massive Machine-to-Machine (M2M) connections and ultra-low latency in addition to having a peak rate up to 1 Gbps. The Passive Optical Network (PON) has the advantages of high bandwidth and low cost. It combines the PON network with mobile access network which has a flexible mobility, and constitutes into a PON and mobile convergence access network, which not only can meet requirements such as high bandwidth, low cost, high mobility, and high quality of traffic (QoS) management, but also can reduce cost of cellular network construction. Therefore, transmitting low-delay data such as Internet of Things by using the wired access PON network is favorable for reducing cost.

The downlink of the traditional PON is based on the broadcast mode, and the uplink is based on a Time Division Multiple Address (TDMA) and a Dynamic Bandwidth Allocation (DBA) mechanism. The traffic requirements uploaded by different users perform scheduling according to the traffic priority specified by the system. An Optical Line Terminal (OLT) allocates an independent slot bandwidth for each user, data uploaded by an Optical Network Unit (ONU) is only transmitted on a specified slot, and slots are separated by guard slot intervals.

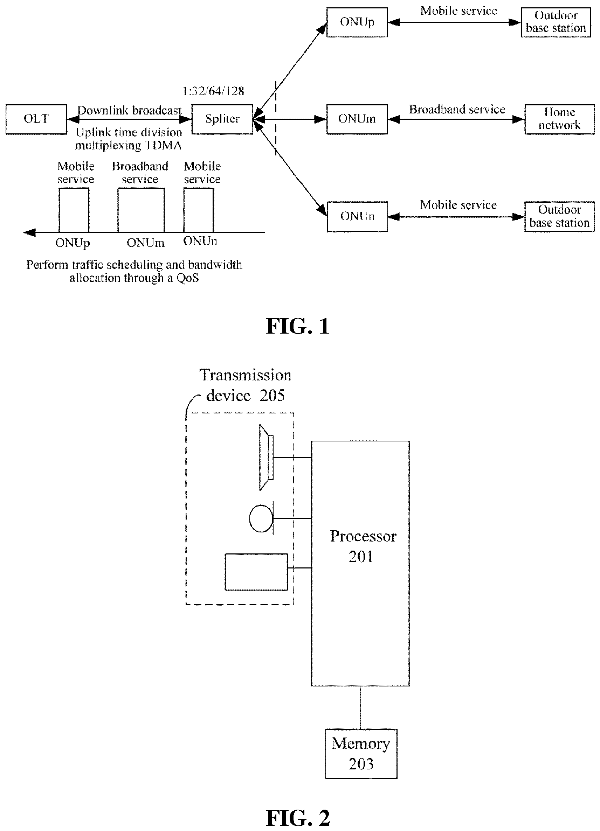

As shown in FIG. 1, the PON network is able to be used to transmit mobile traffics and broadband traffics (which are collectively referred to as a primary traffic), and the primary traffic may be traffics provided by an outdoor base station, a home network, an outdoor base station, etc. When transmitting two different traffics, the uplink and downlink transmission between the OLT and the ONU uses the operation mechanism in the traditional PON network. Data transmitted by the OLT downlink uses the broadcast (i.e., downlink broadcast) mode and each ONU identifies the downlink data corresponding to the ONU according to a unique identifier character. The uplink uses the TDMA. The OLT uses Spliter (1:32/64/128 represents that 32 or 64 or 128 ONUs may be scheduled) to schedule all ONUs according to the QOS traffic priority requirement, and implements dynamic bandwidth allocation in the uplink channel. The primary traffic is time-sharing forwarded in time according to the regulations, and does not interfere with each other. In a time window of the traffic starting up, only a laser of one ONU emits light normally at the same time, and uploads the primary traffic, while lasers of other ONUs in the system are closed and do not emit light. In FIG. 1, on the time line of the uplink transmission, according to the scheduling requirement, the ONUp, the ONUm, and the ONUn (p, m and n are random values) are all allocated with corresponding slot bandwidths, and a slot interval is provided in the middle of each bandwidth for protection. Since the ONUs emit light according to QOS scheduling, different ONUs need to wait for uploading data after traffics with a high priority complete the transmission, and the waiting in the uploading process increases the time delay, therefore, the transmission delay of using the DBA mechanism is relatively large.

The PON using the dynamic bandwidth allocation mechanism is only able to transmit traffic data having a low-delay requirement. However, if ultra-low-delay data is transmitted, such as low-delay internet of things data, the requirement cannot be satisfied. The actual tests show that the transmission delay of the PON system based on dynamic bandwidth allocation generally is several ms or even tens of ms, and the delay of low-delay data is between 0.5 ms and 1 ms, so that transmitting the low-delay data by using the existing PON technology is not feasible. The requirement of low-delay traffic cannot be satisfied.

To reduce the transmission delay of the PON, a static bandwidth allocation mechanism may be adopted to allocate static slots to different traffic signals, and simultaneously reduce the slot interval between traffics and the allocated slot bandwidth length so as to reduce the transmission delay and meet the requirements of some low-delay data transmission. However, since such method requires the traffic bandwidth to be static, the flexibility of service transmission may be reduced. When the traffic bandwidth is smaller than the static bandwidth allocated by the system, idle slots may occur, and limited bandwidth resources are wasted. Therefore, such method has poor bandwidth utilization rate. The delay may also be reduced by optimizing the DBA algorithm, the priority of the low-delay traffic signals is improved and fast forwarding is implemented. But such method for reducing the delay influences the traffic originally having a high priority and a reduction value of the delay is also limited. Another method also adds a pair of uplink and downlink wavelengths in the existing PON system and use an independent wavelength channel to transmit the low-delay traffic. Such method is the simplest and feasible and does not influence the primary traffic transmission since the traffic wavelengths are different. But for transmitting the low-delay traffic, the system needs to add an additional set of emitting and receiving devices, especially needs to add independent optical path emitting and receiving devices, and needs to improve the existing network on a large scale, even needs to directly replace with a new system, which causes the increase of additional cost.

In view of the technical problem of a high cost of transmitting different delays in a passive optical network, no effective solution has yet been proposed.

Further relevant technologies are also known from patent document US 2014/199074 A1 which relates to an orthogonal frequency division multiple access-passive optical network, and from non-patenti document "Scheduling-based URLLC and eMBB multiplexing", by Intedigital Communications, 3GPP DRAFT; R1-1700722, which relates to scheduling-based URLLC and eMBB multiplexing.

### SUMMARY

Embodiments of the present application provide a data transmission method and device and a storage medium to solve at least the problem of a high cost of transmitting different delays in a passive optical network.

The invention is set out in the appended set of claims.

### BRIEF DESCRIPTION OF DRAWINGS

The drawings described herein are used to provide a further understanding of the present application and form a part of the present application. The exemplary embodiments and descriptions thereof in the present application are used to explain the present application and not to limit the present application in any improper way. In the drawings:
FIG. 1 is a schematic diagram of transmitting primary traffic data by using a PON;
FIG. 2 is a schematic diagram of a terminal for implementing a data transmission method of an embodiment of the present application;
FIG. 3 is a flowchart of a data transmission method according to an embodiment of the present application;
FIG. 4 is an architecture diagram of a PON system according to an embodiment of the present application;
FIG. 5 is a schematic diagram of an optional frequency-domain-based superposition according to an embodiment of the present application;
FIG. 6 is a schematic diagram of an optional frequency-domain-based superposition according to an embodiment of the present application;
FIG. 7 is a schematic diagram of an optional frequency-domain-based superposition according to an embodiment of the present application;
FIG. 8 is a schematic diagram of an optional frequency-domain-based superposition according to an embodiment of the present application;
FIG. 9 is a schematic diagram of an optional frequency-domain-based superposition according to an embodiment of the present application;
FIG. 10 is a schematic diagram of an optional frequency-domain-based superposition according to an embodiment of the present application;
FIG. 11 is a schematic diagram of an optional frequency-domain-based superposition according to an embodiment of the present application;
FIG. 12 is a schematic diagram of an optional code-domain-based superposition according to an embodiment of the present application;
FIG. 13 is a schematic diagram of an optional code-domain-based superposition according to an embodiment of the present application;
FIG. 14 is a schematic diagram of an optional code-domain-based superposition according to an embodiment of the present application;
FIG. 15 is a schematic diagram of an optional code-domain-based superposition according to an embodiment of the present application;
FIG. 16 is a schematic diagram of an optional code-domain-based superposition according to an embodiment of the present application;
FIG. 17 is a schematic diagram of an optional code-domain-based superposition according to an embodiment of the present application;
FIG. 18 is a schematic diagram of an optional code-domain-based superposition according to an embodiment of the present application;
FIG. 19 is a schematic diagram of an optional superposition based on a frequency domain and a code domain according to an embodiment of the present application;
FIG. 20 is a schematic diagram of an optional superposition based on a frequency domain and a code domain according to an embodiment of the present application;
FIG. 21 is a schematic diagram of an optional superposition based on a frequency domain and a code domain according to an embodiment of the present application;
FIG. 22 is a schematic diagram of an optional superposition based on a frequency domain and a code domain according to an embodiment of the present application;
FIG. 23 is a schematic diagram of an optional superposition based on a frequency domain and a code domain according to an embodiment of the present application;
FIG. 24 is a schematic diagram of an optional superposition based on a frequency domain and a code domain according to an embodiment of the present application;
FIG. 25 is a flowchart of a data transmission method according to an embodiment of the present application; and
FIG. 26 is a schematic diagram of a data transmission device according to an embodiment of the present application.

### DETAILED DESCRIPTION

The present application will be described hereinafter in detail through embodiments with reference to the drawings. It is to be noted that if not in collision, the embodiments and features therein in the present application may be combined with each other.

It is to be noted that the terms "first", "second" and the like in the description, claims and drawings of the present application are used to distinguish between similar objects and are not necessarily used to describe a particular order or sequence.

### Embodiment one

A method embodiment provided by the embodiment 1 of the present application may be executed in a mobile terminal, a computer terminal or other similar computing apparatuses. Taking the method to be executed in a mobile terminal as an example, as shown in FIG. 2, the computer terminal may include one or more (only one is shown in FIG. 1) processors 201 (the processor 201 may include, but is not limited to, a processing device such as a microprocessor (MCU) or a programmable logic device (FPGA)), a memory 203 used for storing data, and a transmission apparatus 205 used for implementing a communication function. It should be understood by those skilled in the art that the structure shown in FIG. 2 is merely illustrative, and not intended to limit the structure of the electronic apparatus described above.

The memory 203 may be used for storing software programs and modules of application software, such as program instructions/modules corresponding to a device control method in the present application. The processor 201 executes the software programs and modules stored in the memory 203 so as to perform various function applications and data processing, that is, to implement the method described above. The memory may include a high-speed random access memory, and may further include a nonvolatile memory, such as one or more magnetic storage devices, flash memories or other nonvolatile solid-state memories. In some examples, the memory may further include memories which are remotely disposed relative to the processor and these remote memories may be connected to the computer terminal via a network. Examples of the preceding network include, but are not limited to, the Internet, an intranet, a local area network, a mobile communication network and a combination thereof.

The transmission apparatus is used for receiving or transmitting data via one network. The above-mentioned specific examples of the network may include a wireless network provided by a communication provider of the computer terminal. In one example, the transmission apparatus includes a network interface controller (NIC), which may be connected to other network devices via a base station and thus be capable of communicating with the Internet. In one example, the transmission apparatus may be a radio frequency (RF) module, which is configured to communicate with the Internet in a wireless way.

For example, the processor may be used for executing: acquiring a first type of data and a second type of data to be transmitted, where a transmission delay allowed by the first type of data is less than a transmission delay allowed by the second type of data; transmitting the first type of data required to be instantly transmitted on a first carrier frequency band of a transmission channel between a target optical network unit and an optical line terminal, where the transmission channel allows transmitting the first type of data and the second type of data at the same time, and on the transmission channel, a lowest frequency of a second frequency band for transmitting the second type of data is higher than a highest frequency in the first carrier frequency band.

A method embodiment of a data transmission method is provided by the embodiment of the present application. It is to be noted that the steps illustrated in the flowcharts in the drawings may be performed by a computer system such as a group of computers capable of executing instructions, and although logical sequences are illustrated in the flowcharts, the illustrated or described steps may be performed in sequences different from those described herein in some cases.

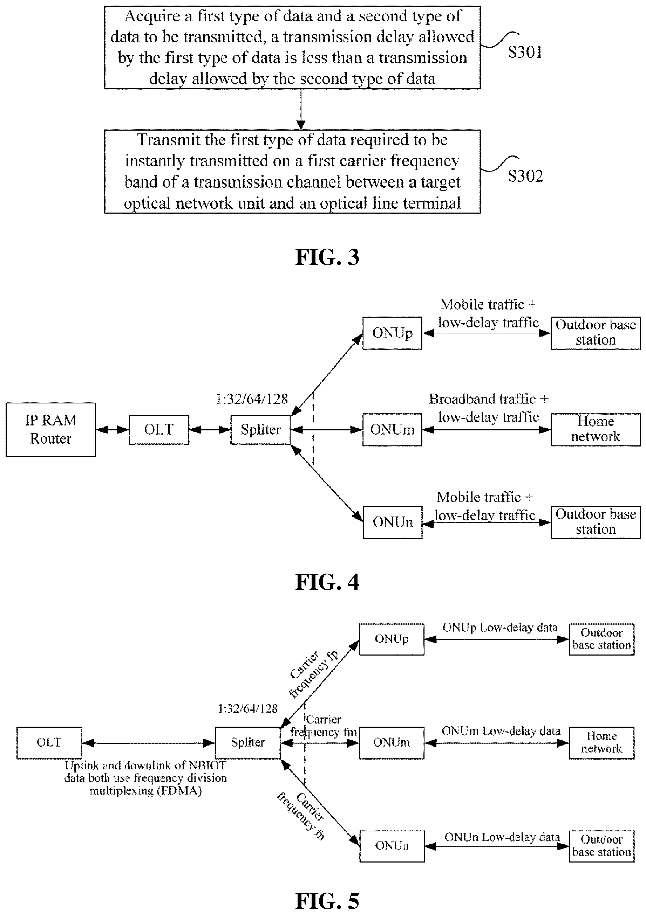

FIG. 3 is a flowchart of a data transmission method according to an embodiment of the present application. As shown in FIG. 3, the method includes the steps described below.

In step S301, a first type of data and a second type of data to be transmitted are acquired. A transmission delay allowed by the first type of data is less than a transmission delay allowed by the second type of data.

In step S302, the first type of data required to be instantly transmitted is transmitted on a first carrier frequency band of a transmission channel between a target optical network unit and an optical line terminal. The transmission channel allows transmitting the first type of data and the second type of data at the same time, and on the transmission channel, a lowest frequency of a second frequency band for transmitting the second type of data is higher than a highest frequency in the first carrier frequency band.

Through the above embodiment, a first type of data and a second type of data to be transmitted are acquired. The transmission delay allowed by the first type of data is less than the transmission delay allowed by the second type of data. The first type of data required to be instantly transmitted is transmitted on the first carrier frequency band of the transmission channel between the target optical network unit and the optical line terminal. The transmission channel allows transmitting the first type of data and the second type of data at the same time. And on the transmission channel, the lowest frequency of the second frequency band for transmitting the second type of data is higher than the highest frequency in the first carrier frequency band. For the second type of data, the second type of data may be transmitted in an existing mode, and for the first type of data, the first type of data is transmitted in a mode of instant transmission, and two types of data are allowed to be transmitted at the same time, thereby solving the technical problem of a high cost of transmitting data having different delays at the same time in a passive optical network, and implementing the technical performance of reducing transmission cost of the data having different delays in the passive optical network.

Optionally, the preceding steps may, but may not necessarily, be executed by an optical network unit and an optical line terminal. In this embodiment, the optical network unit is taken as an example for illustration.

The first type of data is data of low-delay traffic (i.e. low-delay data); the second type of data is data of a mobile traffic or a broadband traffic (i.e., primary traffic data).

In the PON system provided by the present application, the system shares an original uplink/downlink wavelength channel, the transmission mechanism of the mobile traffic or the broadband traffic (i.e. the primary traffic) is unchanged, the downlink still uses a broadcasting mode, the uplink uses a DBA mechanism based on a TDMA, the low-delay traffic does not participate in primary traffic DBA bandwidth scheduling distribution, and the priority of the primary traffic is not changed.

Different traffics in the PON system all use the same wavelength, to distinguish traffic signals, the system divides frequency spectrum resources, and the traditional primary traffic belongs to a high-speed traffic and corresponds to a high frequency band of a transmission channel, so the low-delay traffic is able to be transmitted by using a low frequency band of the transmission channel. A maximum frequency of a low-frequency carrier frequency band is lower than a lowest frequency of the high-speed traffic, and a minimum frequency of the low-frequency carrier frequency band is greater than 30KHz. Specifically, the method may be implemented through the following three solutions.

### Solution one

The solution points for a ONU side, is applied to transmit low-delay data, each ONU is allocated with an independent low-frequency carrier frequency band with an equal length, and each low-frequency carrier frequency band has a central frequency. The low-delay data transmitted by each ONU may implement superposition on the frequency domain and does not interfere with each other on the time domain based on different low-frequency carriers.

In the solution of the step S302, transmitting the first type of data required to be instantly transmitted on the first carrier frequency band of the transmission channel between the target optical network unit and the optical line terminal includes: determining a first sub-frequency band allocated for the target optical network unit in the first carrier frequency band; and transmitting the first type of data on the first sub-frequency band allocated for the target optical network unit.

Transmitting the first type of data on the first sub-frequency band allocated for the target optical network unit may be implemented in the following modes: performing carrier modulation on a first-type signal for transmitting the first type of data by using a carrier corresponding to a frequency in the first sub-frequency band; and converting the first-type signal obtained after the carrier modulation to an optical signal, and transmitting the optical signal on the transmission channel.

Specifically, performing the carrier modulation on the first-type signal for transmitting the first type of data by using the carrier corresponding to the frequency in the first sub-frequency band includes: determining a central frequency in the first sub-frequency band allocated for the target optical network unit; and performing the carrier modulation on the first-type signal by using the carrier corresponding to the central frequency.

The following aspect is not according to the invention and is present for illustration purpose only: the low-delay data obtained after the carrier modulation may be performed the amplitude control and converted into the optical signal through the ONU. The first-type signal obtained after the carrier modulation is converted into the optical signal. And when the optical signal is transmitted on the transmission channel, a signal amplitude of the first-type signal obtained after the carrier modulation is compressed according to a preset compression proportion. The compressed first-type signal is converted into the optical signal transmitted on the transmission channel. The optical signal transmitted by each ONU is superposed with a primary traffic optical signal on a primary optical path. In this case, an amplitude value of the superposed optical signal is unable to exceed an upper limit value of the OLT for receiving the primary traffic.

Optionally, in the first carrier frequency band, each optical network unit in a passive optical network in which the target optical network unit is located is allocated with a frequency sub-band, where bandwidths of any two frequency sub-bands are same, and a frequency spacing is provided between neighboring two frequency sub-bands. The independent carrier frequency band with the equal length allocated to each ONU is equally apportioned according to the length of the total bandwidth of the low frequency band, and the allocation number is equal to the number of the ONUs in the network system. In addition, a frequency interval with the equal length needs to be inserted into each two adjacent independent carrier frequency bands.

FIG. 4 is an architecture diagram of a PON system according to an embodiment of the present application. The PON system mainly includes an IP RAM router; an optical line terminal; an ODN which includes a backbone fiber, a branch fiber and an optical Spliter; an ONU which includes ONUp, ONUm and ONUn, where p, m and n are hypothetical random value; an outdoor base station and a home network. The PON system may transmit three types of traffic data. In the PON system, the primary traffic is time-sharing forward based on the TDMA, so the primary traffic will allocate independent ONUs to access the PON network; and each ONU is able to transmit low-delay traffic. As shown in FIG. 4, as an embodiment of the present application, ONUp and ONUn will be used to transmit the mobile traffic; and the ONUm will be used to transmit the broadband traffic. All ONUs are able to transmit low-delay traffic without occupying the slot and segment overhead of the primary traffic signal. The low-delay traffic, as a channel associated low-amplitude value signal, performs the common transmission along with the primary traffic signal, all low-delay traffics do not need to be scheduled by the DBA, are mutually superposed in time and are able to be simultaneously transmitted and received.

In the PON network system provided by the present application, in the uplink transmission, when one of the ONUs is in the primary traffic transmission window, other ONUs may also normally emit light at the same time, but other light-emitting ONUs are only able to transmit the low-latency traffics at this time. Since multi-path ONUs emit light at the same time, after all optical signals are superposed, an optical power value of the primary optical path will increase and exceed a receiving upper limit value of an OLT receiver, resulting in the saturation of the OLT receiver. To prevent other light-emitting ONUs from influencing the primary traffic transmission, the PON system in the present invention performs the amplitude attenuation control on all transmitted low-delay signals, and then superposes these signals with the primary traffic signals to ensure that the superposed signal amplitude does not exceed the upper limit value OLT for receiving the primary traffic.

In the downlink transmission, the primary traffic and all low-delay traffics will be transmitted by the OLT at the same time. In the process of transmission, similarly, to prevent the downlink ONU receiving end from saturation caused by excessive the electrical signals after the superposition, all transmitted low-delay signals need to be performed the amplitude attenuation control. The amplitude of the superposed signals is unable to exceed the receiving upper limit value of the OLT for receiving the primary traffic.

FIG. 5 is a schematic diagram of an optional frequency-domain-based superposition according to an embodiment of the present application. In the present application, when the low-delay data traffic is transmitted between the ONU and the OLT, the uplink and downlink use a frequency domain superposition mechanism. In the uplink and downlink transmission, the low-delay data of different ONUs are modulated onto different carrier frequencies, and each ONU is allocated with different carrier frequencies, for example, the ONUp corresponds to the carrier frequency fp (which is also referred to as f1), the ONUn corresponds to the carrier frequency fn and the ONUm corresponds to the carrier frequency fm. At the OLT/ONU emitting end, the low-delay data modulated by each carrier also needs to control the signal amplitude to ensure that signal reception of the mobile traffic or the broadband traffic is not influenced after all low-delay data are superimposed, for example, the amplitude of all superimposed optical/electrical signals may be controlled between 5% and 20% of the average amplitude of the primary traffic optical/electrical signals. At the receiving end of the OLT/ONU, the received carrier frequency is performed the frequency selection, which may distinguish the low-delay signals with the carriers of different ONUs. Since data transmitted by the frequency domain superposition mechanism is superposed in time, therefore all low-delay data may be transmitted at the same time. The transmission delay of this method is not influenced by the system traffic scheduling, only the transmission delay of the physical hardware is influenced, thus the delay is very small.

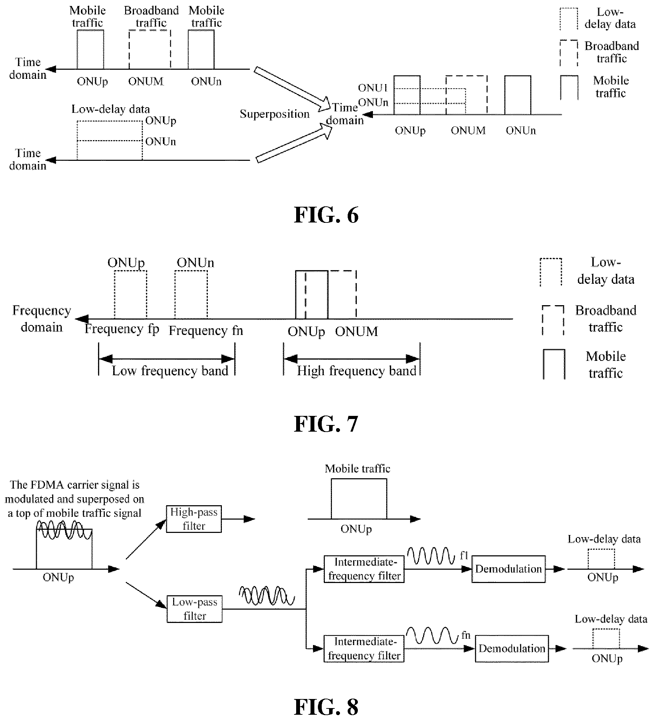

As shown in FIG. 6, a time domain diagram of a PON transmission based on the frequency domain superposition is illustrated. The mobile traffic transmitted by the ONUp and the ONUn are separated from the broadband traffic transmitted by the ONum on a time domain line. The low-delay data transmitted by the ONUP and the ONUn is superposed on the time line. At the same time, the low-delay data transmitted by each ONU is not limited by time scheduling and may be superposed with the primary traffic in the time line.

As shown in FIG. 7, a frequency domain diagram of the PON transmission based on the frequency domain superposition is illustrated. The low-delay data transmitted by the ONUp and the ONUn is separated on the frequency domain, and separately corresponds to different frequencies fp and fn. The mobile traffic transmitted by the ONUp and the ONUn and the broadband traffic transmitted by the ONum are superposed on the frequency domain.

As shown in FIG. 8, a principle of a PON technology based on a frequency domain superposition is illustrated. All low-delay data is performed the amplitude control and superposed on a top of primary traffic data. In the uplink channel, when the DBA authorizes one of the ONUs to open a slot of a primary traffic window, all ONUs are able to emit light, but can only transmit low-delay data, and amplitudes of the optical signals are controlled in a certain amplitude, and it may be specified that the amplitudes of the optical signals after the optical signals of the low-delay data is superposed are controlled between 5% and 20% of an average amplitude of the optical signals of the primary traffic. In the figure, when the ONUp transmits the mobile traffic, the low-delay signals with different frequencies fp and fn are superposed on the top of the mobile traffic data. At the receiving end of the OLT/ONU, the low-frequency signals are filtered out by a high-pass filter, and only the mobile traffic or the broadband traffic are obtained. The high-frequency signals are filtered out by a low-pass filter, and the low-delay signals modulated by different carriers are only obtained, and the frequency selection is performed through an intermediate-frequency filter, carrier modulation signals of frequencies fp / fn (or fm) may be separately obtained. Each carrier modulation signal is demodulated and the low-delay data transmitted by the ONUp and the ONUm is separately obtained.

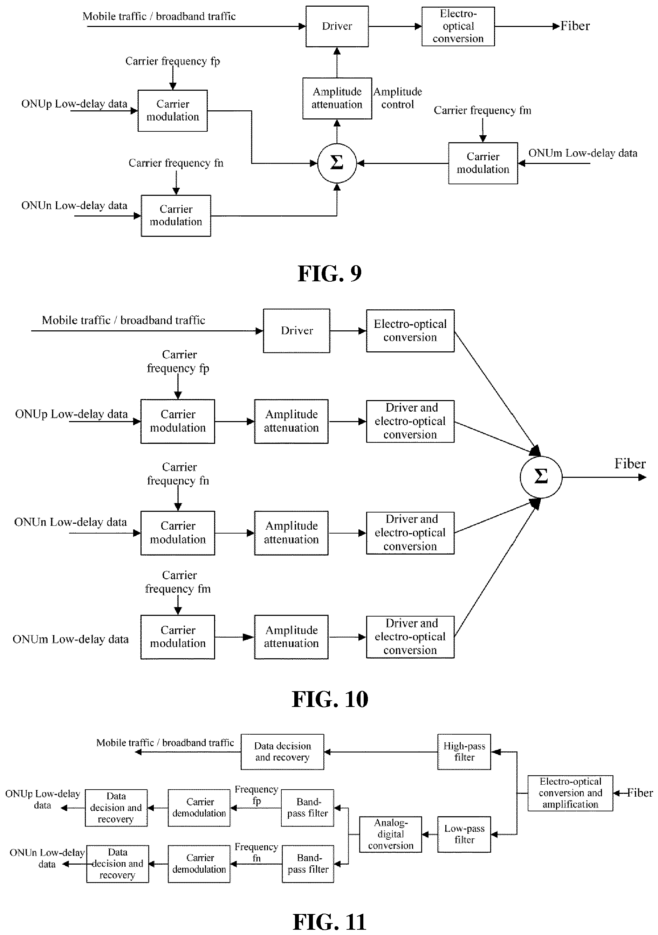

As shown in FIG. 9, a solution principle of the ONU emitting front-end technology based on a frequency domain superposition is illustrated. At the OLT emitting end, the low-delay data transmitted by the downlink to each ONU is modulated by different carrier frequencies, and various modulation modes are provided, such as amplitude-shift keying, frequency-shift keying and phase-shift keying. After all modulated low-delay electrical signals are superposed, the signals uniformly perform a certain amplitude attenuation, such as limiting the amplitude of all superposed electrical signals is controlled between 5% and 20% of the average amplitude of the primary traffic electrical signals. For example, it is assumed that the amplitude of the traffic electrical signal is 800mV, and the control amplitude required by the system to be 10%, then a sum of the amplitude Vp-pm required of all ONU superposed electrical signals obtained is 800*10%=80mV. The amplitude attenuation for the signals may use an electric attenuator, and all superposed electric signals obtained are converted into the optical signals through a driver and electro-optical conversion and transmitted to a downlink main path optical fiber.

FIG. 10 illustrates a solution principle of the ONU emitting front-end technology based on a frequency domain superposition.

At the uplink ONU emitting end, simultaneously, when the DBA authorizes one of the ONUs to open a slot of a primary traffic window, all ONUs are able to emit light, but can only transmit the low-delay data, each ONU uses the allocated carrier frequency to perform the carrier modulation on the low-delay data, and then performs the amplitude attenuation on the modulated signals. The signals obtained after the amplitude attenuation are converted into a small current through the driver and the small current drives an electro-optical conversion unit to convert the signals into low-power optical signals. Finally, all the optical signals are transmitted to an uplink primary optical path, and multiplexed with a primary traffic light. It may be specified that an average power of the optical signals of the superposed low-delay data is controlled between 5% and 20% of an average power of primary traffic optical signals, thus each ONU needs to be performed the optical power amplitude control. An average power value of the optical signals of each ONU may be equally apportioned by the number of ONUs. For example, it is assumed that the average optical power of the traffic light is 10 dBm, and the control amplitude required by the system to be 10%, the downlink network has 32 ONUs, then a sum of the average optical powers of all ONUs is 10dBm-10lg10=0dBm.A light-emitting average power of each ONU is 10lg (1mW÷32) ≈ -15dBm.

FIG. 11 illustrates a solution principle of the OLT/ONU receiving front-end technology based on a frequency domain superposition. The optical signals received by the OLT/ONU implement low and high frequency signal separation through two paths of filters after the electro-optical conversion and amplification. The low-frequency signals may be filtered out by the high-pass filter to obtain the mobile traffic or the broadband traffic signals. The signals are high-frequency digital signals, and original mobile or broadband data signals may be recovered as long as 0/1 level decision is simply performed. The low-delay data with the carrier modulation may be obtained through the low-pass filter. Through the analog-to-digital conversion, analog signals are converted into digital signals. A frequency selection is performed through a digital band-pass filter, and low-delay digital signals with carrier frequencies of fp and fn are separated out. Then the separated digital signals are demodulated to remove the carrier, and finally the original low-delay data signals may be recovered through 0/1 level decision.

Through the above solution, other ONUs of the PON are able to transmit the low-delay data at the same time while a certain ONU of the PON transmits the primary traffic signal. The low-delay data transmitted by each ONU is modulated on a low-frequency carrier of a central frequency corresponding to the ONU.

### Solution two

The solution points to an ONU side, other ONUs of a PON are able to transmit low-delay data at the same time while a certain ONU of the PON transmits a primary traffic signal. The low-delay data transmitted by each ONU needs to be performed spectrum spreading by different pseudo-random sequences, and then be modulated onto a same low-frequency carrier. It may be implemented that the low-delay data is superposed on a code domain and does not interfere with each other on a time domain.

In the solution of the step S302, transmitting the first type of data required to be instantly transmitted on the first carrier frequency band of the transmission channel between the target optical network unit and the optical line terminal includes: performing spectrum spreading on a first-type signal for transmitting the first type of data; performing carrier modulation on the first-type signal obtained after the spectrum spreading by using a carrier corresponding to a first frequency on the first carrier frequency band, where the first frequency is a frequency used in response to determining that all optical network units in an passive optical network in which the target optical network unit is located perform the carrier modulation; and converting the first-type signal obtained after the carrier modulation to an optical signal, and transmitting the optical signal on the transmission channel.

Specifically, performing the spectrum spreading on the first-type signal for transmitting the first type of data includes: acquiring a first pseudo-random sequence allocated for the target optical network unit; and performing the spectrum spreading on the first-type signal by using the first pseudo-random sequence, that is, all low-delay signals after the spectrum spreading are modulated on a same low-frequency carrier, and a low-frequency carrier frequency may be selected arbitrarily in the low-frequency band.

The following aspect is not according to the invention and is present for illustration purpose only: the low-frequency signals after the carrier modulation need to be performed the amplitude control and converted into the optical signal through the ONU. Specifically, the first-type signal obtained after the carrier modulation is converted into the optical signal. And when the optical signal is transmitted on the transmission channel, a signal amplitude of the first-type signal obtained after the carrier modulation is compressed according to a preset compression proportion. The compressed first-type signal is converted into the optical signal transmitted on the transmission channel. The optical signal transmitted by each ONU is superposed with a primary traffic optical signal on a primary optical path, and an amplitude value of the superposed optical signal is unable to exceed an upper limit value of the OLT for receiving the primary traffic.

Optionally, a pseudo-random sequence having a same length is allocated to each optical network unit of the passive optical network, where a length of the pseudo-random sequence is related to a number of optical network units in the passive optical network. The length of a pseudo-random sequence code is determined by an index of a second power of the number of ONUs.

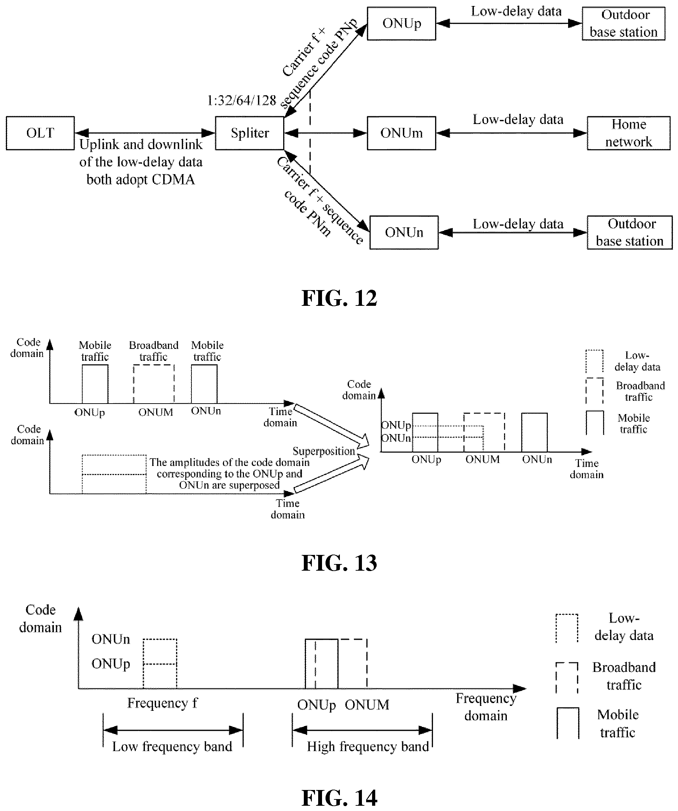

As shown in FIG. 12, a working principle of the PON based on a frequency domain superposition is illustrated. In the PON system of the present application, when the low-delay data traffic is transmitted between the ONU and the OLT, the uplink and downlink may also use a code domain superposition mechanism. Firstly, different low-delay data needs to be encoded, and then be performed the spectrum spreading modulation through orthogonal sequence codes. Each ONU corresponds to a different orthogonal sequence code, and different orthogonal sequence codes may identify information of different ONUs, for example, an ONUp corresponds to a sequence code PNp, and an ONUn corresponds to a sequence code PNn. All the low-delay data after the spectrum spread modulation is further performed the carrier modulation, and the carrier frequency may be any suitable frequency f which is selected from the low frequency band. Since data transmitted by a code domain superposition mechanism is superposed in the time domain and the code domain, the ONUp and the ONUn may transmit the low-delay data at the same time. The transmission delay of this method is not influenced by the system traffic scheduling, only the transmission delay of the physical hardware is influenced, thus the delay is very small.

As shown in FIG. 13, the time domain and the code domain transmitted by the PON based on the frequency domain superposition is illustrated. A mobile traffic transmitted by the ONUp and the ONUn are separated from a broadband traffic transmitted by the ONum on the time domain and the code domain. The low-delay data of the ONUP and the ONUn are superposed in the time domain and the code domain. At the same time, the low-delay data transmitted by each ONU is not limited by time scheduling and may be superposed with the primary traffic in a time line.

As shown in FIG. 14, the frequency domain and the code domain transmitted by the PON based on the frequency domain superposition is illustrated. The low-delay data and the primary traffic transmitted by the ONU are separated in the frequency domain. The low-delay data is in the low frequency band, and corresponds to a carrier frequency f and the primary traffic is in the high frequency band. The mobile traffic transmitted by the ONUp and the ONUn and the broadband traffic transmitted by the ONum are superposed on the frequency domain. The low-delay data of the ONUp and the ONUn are superposed in the code domain.

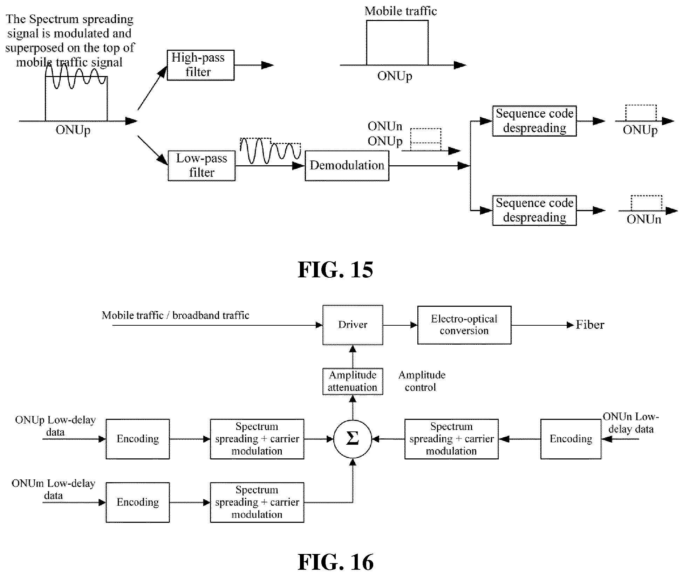

As shown in FIG. 15, a principle of a PON technology based on a code domain superposition is illustrated. All low-delay data is performed the amplitude control and superposed on a top of primary traffic data. In the uplink channel, when a DBA authorizes one of the ONUs to open a slot of a primary traffic window, all ONUs may emit light, but can only transmit low-delay data, and amplitudes of optical signals are controlled in a certain amplitude, and it is specified that the amplitudes of optical signals after the optical signals of the low-delay data is superposed are controlled between 5% and 20% of an average amplitude of the optical signals of the primary traffic. In FIG. 15, when the ONUp transmits the mobile traffic, different sequence codes PNp and PNn spread spectrum of different low-delay data, and finally perform the carrier modulation by a carrier f, and all data are superposed on the top of the mobile traffic data after being controlled by the amplitude attenuation. At a receiving end, low-frequency signals are filtered out by a high-pass filter and the mobile traffic may be obtained. The high-frequency signals are filtered out by a low-pass filter, low-frequency low-delay data with the carrier modulation is obtained. And then the carrier frequency is filtered out by demodulation, the superposed low-delay data obtained after the spectrum spreading may be separately obtained. The superposed data is despreaded by using different sequence codes to obtain low-delay data of different ONUs.

As shown in FIG. 16, a solution principle of the OLT emitting front-end technology based on a code domain superposition is illustrated. At the OLT emitting end, the low-delay data of the ONUp/ONUm is encoded first, and then is performed spectrum spreading through the sequence code PNp/PNm. The data after the spectrum spreading is performed the carrier modulation through the same carrier frequency f, and is superposed on the electrical signals of the mobile traffic or the broadband traffic after the amplitude attenuation. The principle of all ONU amplitude control is the same with that of a FDAM OLT emitting end. All the superposed electric signals are converted into the optical signals through a driver and electro-optical conversion and transmitted to a downlink main path optical fiber.

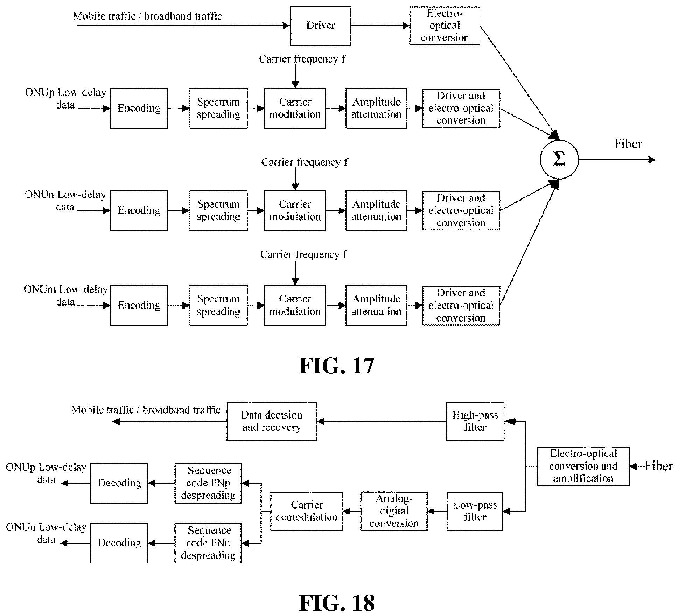

As shown in FIG. 17, a solution principle of the ONU emitting front-end technology based on a code domain superposition is illustrated. In the uplink channel, the low-delay data transmitted by each ONUp/ONUm/ONUn is encoded first, and then is performed the spectrum spreading through the sequence code PNp/PNm/PNn. The data obtained after the spectrum spreading performs the carrier modulation through the same carrier frequencies f, and then the modulated electric signals are converted into the optical signals through the amplitude attenuation, driver and electro-optical conversion. All low-delay optical signals uploaded by the ONU will perform multiplexing with the optical signals of the mobile traffic or the broadband traffic on the primary optical path. The principle of the low-delay optical power control of all ONUs is the same with that of a FDAM OLT emitting end.

As shown in FIG. 18, a solution principle of the OLT/ONU receiving front-end technology based on a code domain superposition is illustrated. The received optical signals implement low and high frequency signal separation through two paths of filters obtained after the electro-optical conversion and amplification. The low-frequency signals may be filtered out by the high-pass filter to obtain the mobile traffic or the broadband traffic signals, original mobile or broadband data signals can be recovered as long as 0/1 level decision is simply performed. The low-delay data with the carrier modulation may be obtained through the low-pass filter. The low-delay data is converted into digital signals through analog-to-digital conversion. And the superposed low-delay data is despreaded by using the corresponding sequence code after the digital signals are performed carrier demodulation and spectrum spreading, and the low-delay data of different ONUs may be obtained through the demodulation.

The above solution uses the code domain superposition technology, does not need to perform frequency bandwidth allocation, and the transmission rate is less constrained by the bandwidth. However, the solution needs to use a longer sequence code to spread spectrum of the effective data, the more the number of ONUs is, the longer the bit of the required sequence code is, the longer the code obtained after the spectrum spreading is, and the smaller the amount of valid data transmitted in the same time.

### Solution three

ONUs in a PON system are grouped into groups, and according to the number of ONUs, the ONUs are divided into M×N combinations. M groups are provided and each group has N ONUs. M different groups use M different and independent low-frequency carrier frequency bands; each two adjacent independent carrier frequency bands need to be inserted with frequency gaps having a same length, and N ONUs in the same group use the same low-frequency carrier frequency band. Each low-frequency carrier frequency band corresponds to a central frequency, and each carrier frequency band is M equally apportioned according to the length of the total bandwidth of the low frequency band, and N ONUs in the same group need to use N different pseudo-random sequences for spectrum spreading.

In the solution of the step S302, when transmitting the first type of data required to be instantly transmitted on the first carrier frequency band of the transmission channel between the target optical network unit and the optical line terminal, low-delay data transmitted by each ONU needs to perform the spectrum spreading through different pseudo-random sequences in a corresponding group, and then perform carrier modulation by using low-frequency carrier frequency of the corresponding group, which may be implemented by: performing spectrum spreading on a first-type signal for transmitting the first type of data; performing carrier modulation on the first-type signal obtained after the spectrum spreading by using a carrier corresponding to a second frequency on the first carrier frequency band, where the second frequency is a frequency used in response to determining that all optical network units in an optical network unit group in which the target optical network unit is located perform the carrier modulation; and converting the first-type signal obtained after the carrier modulation to an optical signal, and transmitting the optical signal on the transmission channel.

Before performing the spectrum spreading on the first-type signal for transmitting the first type of data, the optical network unit group in which the target optical network unit is located is determined first. A passive optical network in which the target optical network unit is located includes multiple optical network unit groups, and each of the multiple optical network unit groups includes multiple optical network units.

In such case, performing the spectrum spreading on the first-type signal for transmitting the first type of data includes: acquiring multiple pseudo-random sequences allocated for all optical network unit groups in which the target optical network unit is located; acquiring a second pseudo-random sequence corresponding to the target optical network unit in the multiple pseudo-random sequences; and performing the spectrum spreading on the first-type signal by using the second pseudo-random sequence.

A length of the pseudo-random sequence is related to a number of optical network units in the optical network unit groups. The length of a pseudo-random sequence code is determined by an index of a second power of N

Optionally, performing the carrier modulation on the first-type signal obtained after the spectrum spreading by using the carrier corresponding to the second frequency in the first frequency band includes: acquiring a second sub-frequency band allocated for the optical network unit groups in which the target optical network unit is located on the first carrier frequency band; and performing the carrier modulation on the first-type signal by using the carrier corresponding to the second frequency on the second sub-frequency band.

The second frequency may be a central frequency in the second sub-frequency band.

Optionally, all low-delay signals obtained after the spectrum spreading may be modulated onto a low-frequency carrier in a corresponding group, and the first-type signal obtained after the carrier modulation is converted into the optical signal. And when the optical signal is transmitted on the transmission channel, the low-frequency signals obtained after the carrier modulation need to perform an amplitude control, and are converted to the optical signal through the ONU. The following aspect is not according to the invention and is present for illustration purpose only: compressing a signal amplitude of the first-type signal obtained after the carrier modulation according to a preset compression proportion; and converting the compressed first-type signal into the optical signal transmitted on the transmission channel. The optical signal transmitted by each ONU is superposed with a primary traffic optical signal on a primary optical path, and an amplitude value of the superposed optical signal is unable to exceed an upper limit value of the OLT for receiving the primary traffic.

In the above embodiment, on an ONU side, other ONUs of the PON are able to transmit the low-delay data at the same time while a certain ONU of the PON transmits the primary traffic signal.

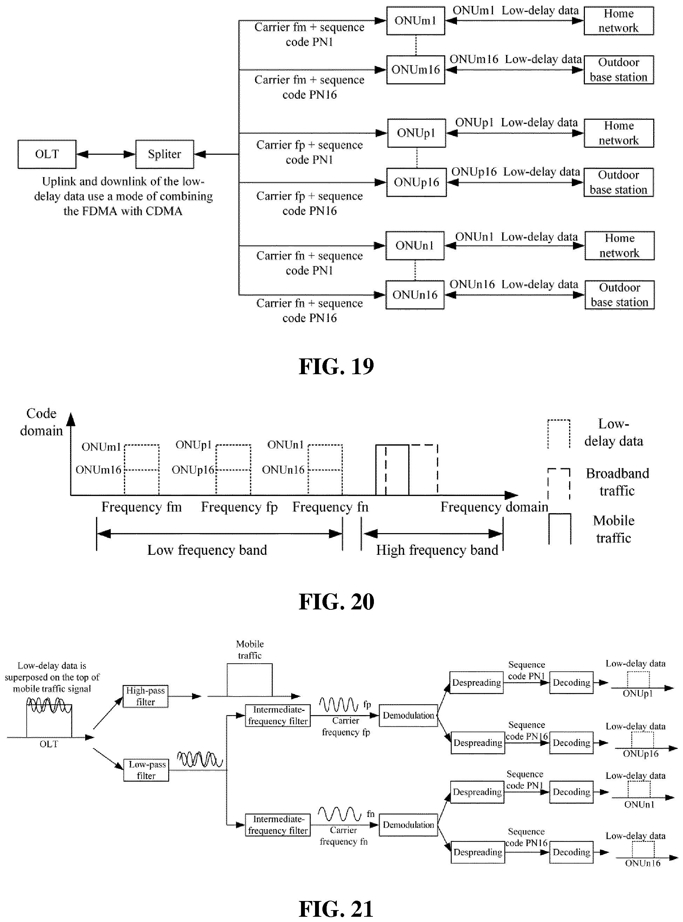

As shown in FIG. 19, a working principle of the PON based on a frequency domain superposition and a code domain superposition is illustrated. In the PON system of the present application, low-delay data transmission in the uplink/downlink channels may also use a mode of combining the frequency domain superposition with the code domain superposition. As shown in FIG. 19, it is assumed that the ONUs are divided into multiple groups, each group is composed of 16 ONUs (the combination may be arbitrarily selected), such as ONUm1~ONUm16, ONUp1~ONUp16, ONUn1~ONUn16. Three different groups of ONUs separately use fm1, fp1 and fn1 as carrier frequencies. 16 ONUs in the same group use 16 different sequence codes PN1~PN16 for the spectrum spreading. The ONUs in different groups may reuse these 16 sequence codes. Different ONUs may be distinguished by a combination of the carrier frequency and the sequence code. As with the principle of the code domain superposition, the low-delay data of different ONUs needs to be encoded first, and then a spectrum spreading modulation is performed through the sequence code and finally the carrier modulation is performed through the corresponding carrier frequency. For example, ONUm1 performs spectrum spreading through a PN1 sequence code and performs the carrier modulation by using fm1.ONUm16 performs spectrum spreading through a PN16 sequence code and performs the carrier modulation by using fm1. Since the data transmitted in combination with the frequency domain superposition and the code domain superposition mechanism may also be superposed in the time domain and the code domain, different ONUs may transmit low-delay data at the same time. The transmission delay of this method is not influenced by the system traffic scheduling, only the transmission delay of the physical hardware is influenced, thus the delay is very small.

As shown in FIG. 20, the frequency domain and code domain of the PON transmission based on the frequency domain superposition and the code domain superposition is illustrated. The low-delay data and the primary traffic transmitted by the ONU are separated in the low frequency band and the high frequency band on the frequency domain. The low-delay data of the ONU in the same group corresponds to the same frequency, and the low-delay data of different ONUs in the same group are superposed on the code domain. The ONUs in different groups correspond to different frequencies. For example: the low-delay data of the ONUm1 and the ONUm 16 is on the frequency fm1 in the frequency domain, the ONUm1 and the ONUn16 correspond to the carrier frequency fn1. The low-delay data of the ONUm1/ ONUn1 and the ONUm16/ ONUn16 are superposed in the code domain.

As shown in FIG. 21, a principle of a PON technology based on a frequency domain superposition and a code domain superposition is illustrated. All low-delay data is performed the amplitude control and superposed on a top of primary traffic data. In the uplink channel, when a DBA authorizes one of the ONUs to open a slot of a primary traffic window, all ONUs may emit light, but can only transmit low-delay data, and amplitudes of optical signals are controlled in a certain amplitude, and it is specified that the amplitudes of optical signals after low-delay data of the optical signals is superposed are controlled between 5% and 20% of an average amplitude of the optical signals of the primary traffic. In FIG. 21, when the OLT transmits the mobile traffic, different sequence codes PN 1 to PN 16 spread spectrum of different low-delay data in the same group, ONUp1 to ONUp 16 use a carrier fp 1 to perform the carrier modulation, and ONUn1 to ONUn16 use a carrier fn1 to perform the carrier modulation, all data are superposed on the top of the mobile traffic data after being controlled by the amplitude attenuation. At a receiving end, low-frequency signals are filtered out by a high-pass filter, the mobile traffic may be obtained. High-frequency signals are filtered out by a low-pass filter, and low-frequency low-delay data with the carrier modulation is obtained. Different carrier frequencies may be selected by an intermediate-frequency filter through different central frequencies. For example, the intermediate frequency filter selects the frequency fp 1, and the low-delay signal only keeps the carrier signal of the fp 1 after passing through the filter. The signal removes the carrier through demodulation and is able to obtain the low-delay data superposed on the frequency point. And then the data signal is performed dispreading by using the corresponding sequence code and data which cannot be performed dispreading is discarded, and finally the corresponding sequence code is used to perform dispreading on a data signal, and the low-delay data corresponding to ONUp1 can be obtained.

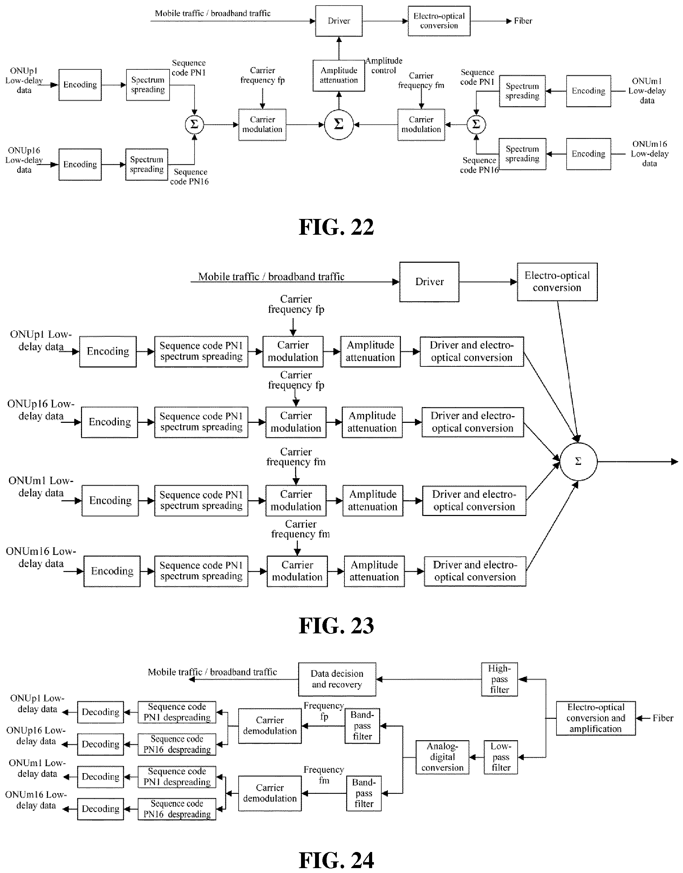

As shown in FIG. 22, a solution principle of the OLT emitting front-end technology based on a frequency domain superposition and a code domain superposition is illustrated. At the OLT emitting end, the low-delay data of the ONUp1/ONUm1 is encoded first, and then is performed spectrum spreading through the sequence code PN 1. The data obtained after the spectrum spreading is performed the carrier modulation through different carrier frequencies fp 1 and fm 1, and is superposed on the electrical signals of the mobile traffic or the broadband traffic obtained after the amplitude attenuation. The principle of the amplitude control of all ONU low-delay electrical signals is the same with that of a FDAM/code domain superposition OLT emitting end. All the superposed electric signals are converted into the optical signals through a driver and electro-optical conversion and transmitted to a downlink main path optical fiber.

As shown in FIG. 23, a solution principle of the ONU front-end transmission technology based on a frequency domain superposition and a code domain superposition is illustrated. In the uplink channel, the low-delay data transmitted by each ONUp1/ ONUp16/ONUm1/ ONUm16 is encoded first, and then is performed the spectrum spreading through the sequence code PN1/PN16. The data obtained after the spectrum spreading performs the carrier modulation through different carrier frequencies fp 1 and fm 1, and then the modulated electric signals are converted into the optical signals through the amplitude attenuation, driver and electro-optical conversion. All low-delay optical signals uploaded by the ONU will perform multiplexing with the optical signals of the mobile traffic or the broadband traffic on the primary optical path. The principle of the low-delay optical power control of all ONUs is the same with that of a FDAM OLT emitting end.

As shown in FIG. 24, a solution principle of the OLT/ONU receiving front-end transmission technology based on a frequency domain superposition and a code domain superposition is illustrated. The received optical signals implement low and high frequency signal separation through two paths of filters obtained after the electro-optical conversion and amplification. The low-frequency signals may be filtered out by the high-pass filter to obtain the mobile traffic or the broadband traffic, the original mobile or broadband data signal can be recovered as long as simple 0/1 level decision is performed. The low-delay data with the carrier may be obtained through the low-pass filter. The low-delay data is converted into digital signals through the analog-to-digital conversion. And the digital signals are performed carrier frequency selection through different bandpass filters. For example, a modulation signal with the carrier frequencies fp1 and fm1 may be selected through a bandpass filter. The two paths of signals remove the carrier through the demodulation and are able to obtain the low-delay data superposed on the frequency point. For example, the intermediate frequency filter selects the frequency fp 1, and the low-delay signal only keeps the carrier signal of the fp 1 after passing through the filter. The signal removes the carrier through demodulation and is able to obtain the low-delay data superposed on the frequency point. And then the data signal is performed dispreading by using the corresponding sequence code and data which cannot be performed dispreading is discarded, and finally the corresponding sequence code is used to perform dispreading on a data signal, and the low-delay data corresponding to ONUp 1 can be obtained.

The above solution combines two technologies of the frequency domain superposition and the code domain superposition. By a format of combining the two technologies, the solution may be implemented only by allocating a low frequency band and a short sequence code, and a transmission rate of the ONU is not influenced by the number of ONUs.

In the embodiment of the present application, the PON system uses the original upper and lower wavelengths, and the low-latency traffic and the primary traffic uses the high and low frequency spectrum separation transmission mode. In addition, all low-delay data implements the simultaneous transmission of all low latency data in a PON topological structure based on a method of multi-path signals superposed in the frequency domain or the code domain, which may greatly reduce transmission delay of the data. The system may be implemented by only adding a set of emitting and receiving electrical device in the original system without changing an optical path device, and the cost is increased very little. The PON system provided by the present invention has the advantages of low cost, high bandwidth utilization rate, flexible traffic transmission and capability of transmitting ultra-low-delay traffic.

In the embodiment of the present application, the steps S301 to S302 may be executed by an optical line terminal, and in this embodiment, the optical line terminal is taken as an example for illustration.

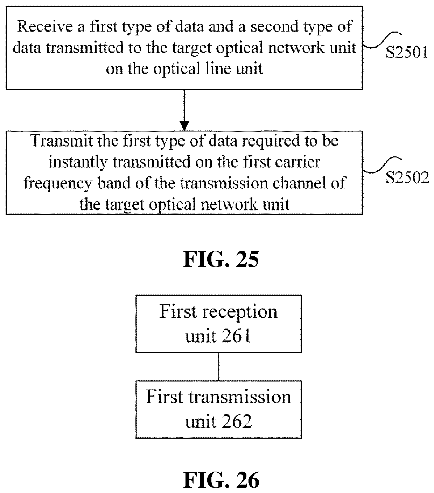

FIG. 25 is a flowchart of a data transmission method according to an embodiment of the present application. As shown in FIG. 25, the method includes the steps described below.

In step S2501, a first type of data and a second type of data transmitted to the target optical network unit is received on the optical line unit. A transmission delay allowed by the first type of data is less than a transmission delay allowed by the second type of data.

In step S2502, the first type of data required to be instantly transmitted is transmitted on a first carrier frequency band of a transmission channel of a target optical network unit. The transmission channel allows transmitting the first type of data and the second type of data at the same time, and on the transmission channel, a lowest frequency of a second frequency band for transmitting the second type of data is higher than a highest frequency in the first carrier frequency band.

Through the above step, the second type of data may be transmitted in an existing mode, and for the first type of data, the first type of data is transmitted in a mode of instant transmission, and two types of data are allowed to be transmitted at the same time, thereby solving the technical problem of a high cost of transmitting data having different delays at the same time in a passive optical network, and implementing the technical performance of reducing transmission cost of the data having different delays in the passive optical network.

The first type of data is data of low-delay traffic (i.e. low-delay data); the second type of data is data of a mobile traffic or a broadband traffic (i.e., primary traffic data).

In the PON system provided by the present application, the system shares an original uplink/downlink wavelength channel, the transmission mechanism of the mobile traffic or the broadband traffic (i.e. the primary traffic) is unchanged, the downlink still uses a broadcasting mode, the uplink uses a DBA mechanism based on a TDMA, the low-delay traffic does not participate in primary traffic DBA bandwidth scheduling distribution, and the priority of the primary traffic is not changed.

Different traffics in the PON system all use the same wavelength, to distinguish traffic signals, the system divides frequency spectrum resources, and the traditional primary traffic belongs to a high-speed traffic and corresponds to a high frequency band of a transmission channel, so the low-delay traffic is able to be transmitted by using a low frequency band of the transmission channel. A maximum frequency of a low-frequency carrier frequency band is lower than a lowest frequency of the high-speed traffic, and a minimum frequency of the low-frequency carrier frequency band is greater than 30KHz. Specifically, the method may be implemented through the following three solutions.

### Solution one

In the technical solution of the step S2502, the step in which the first type of data required to be instantly transmitted is transmitted on the first carrier frequency band of the transmission channel between the target optical network unit and the optical line terminal includes: determining a first sub-frequency band allocated for the target optical network unit in the first carrier frequency band; and transmitting the first type of data on the first sub-frequency band allocated for the target optical network unit.

Optionally, transmitting the first type of data on the first sub-frequency band allocated for the target optical network unit includes: performing carrier modulation on a first-type signal for transmitting the first type of data by using a carrier corresponding to a frequency in the first sub-frequency band; and converting the first-type signal obtained after the carrier modulation to an optical signal, and transmitting the optical signal on the transmission channel.

Optionally, performing the carrier modulation on the first-type signal for transmitting the first type of data by using the carrier corresponding to the frequency in the first sub-frequency band includes: determining a central frequency in the first sub-frequency band allocated for the target optical network unit; and performing the carrier modulation on the first-type signal by using the carrier corresponding to the central frequency.

The following aspect is not according to the invention and is present for illustration purpose only: the transmission sub-module is further configured to before converting the first-type signal obtained after the carrier modulation to the optical signal and transmitting the optical signal on the transmission channel, compress a signal amplitude of the first-type signal obtained after the carrier modulation according to a preset compression proportion; and convert the compressed first-type signal into the optical signal transmitted on the transmission channel.

Optionally, in the first carrier frequency band, each optical network unit in a passive optical network in which the target optical network unit is located is allocated with a frequency sub-band, where bandwidths of any two frequency sub-bands are same, and a frequency spacing is provided between neighboring two frequency sub-bands.

In the above embodiment, an OLT of a PON modulates the low-delay data transmitted to multiple ONUs to low-frequency carriers of a corresponding central frequency. All low-latency signals after the spectrum spreading need to be performed an amplitude control, and superposed on primary traffic electrical signals, an amplitude value of the superposed electrical signals is unable to exceed an upper limit value of the ONU receiving the primary traffic, thereby implementing instant transmission of the low-delay data.

### Solution two

In the technical solution of the step S2502, the first type of data required to be instantly transmitted is transmitted on the first carrier frequency band of the transmission channel of the target optical network unit includes: performing spectrum spreading on a first-type signal for transmitting the first type of data; performing carrier modulation on the first-type signal obtained after the spectrum spreading by using a carrier corresponding to a first frequency on the first carrier frequency band, where the first frequency is a frequency used in response to determining that all optical network units in an passive optical network in which the target optical network unit is located perform the carrier modulation; and converting the first-type signal obtained after the carrier modulation to an optical signal, and transmitting the optical signal on the transmission channel.

Optionally, performing the spectrum spreading on the first-type signal for transmitting the first type of data includes: acquiring a first pseudo-random sequence allocated for the target optical network unit; and performing the spectrum spreading on the first-type signal by using the first pseudo-random sequence.

The following aspect is not according to the invention and is present for illustration purpose only: the transmission sub-module is further configured to before converting the first-type signal obtained after the carrier modulation to the optical signal and transmitting the optical signal on the transmission channel, compress a signal amplitude of the first-type signal obtained after the carrier modulation according to a preset compression proportion; and convert the compressed first-type signal into the optical signal transmitted on the transmission channel.

Optionally, a pseudo-random sequence having a same length is allocated to each optical network unit of the passive optical network, where a length of the pseudo-random sequence is related to a number of optical network units in the passive optical network.

In the embodiment, an OLT of a PON performs spectrum spreading modulation on low-delay data transmitted to multiple ONUs by using a pseudo-random sequence code in a corresponding group; and a length of the pseudo-random sequence code is determined by an index of a second power of the number of ONUs. All low-latency signals obtained after the spectrum spreading are modulated on a same low-frequency carrier. The low-frequency carrier frequency may be selected arbitrarily in the low-frequency band. All low-latency electrical signals are superposed on primary traffic electrical signals and an amplitude value of the superposed electrical signals is unable to exceed an upper limit value of the ONU receiving the primary traffic.

### Solution three

In the technical solution of the step S2502, the first type of data required to be instantly transmitted is transmitted on the first carrier frequency band of the transmission channel of the target optical network unit includes: performing spectrum spreading on a first-type signal for transmitting the first type of data; performing carrier modulation on the first-type signal obtained after the spectrum spreading by using a carrier corresponding to a second frequency on the first carrier frequency band, where the second frequency is a frequency used in response to determining that all optical network units in an optical network unit group in which the target optical network unit is located perform the carrier modulation; and converting the first-type signal obtained after the carrier modulation to an optical signal, and transmitting the optical signal on the transmission channel.

Optionally, before performing the spectrum spreading on the first-type signal for transmitting the first type of data, the optical network unit group in which the target optical network unit is located is determined. A passive optical network in which the target optical network unit is located includes multiple optical network unit groups, and each of the multiple optical network unit groups includes multiple optical network units.

Optionally, performing the spectrum spreading on the first-type signal for transmitting the first type of data includes acquiring multiple pseudo-random sequences allocated for all optical network unit groups in which the target optical network unit is located; acquiring a second pseudo-random sequence corresponding to the target optical network unit in the multiple pseudo-random sequences; and performing the spectrum spreading on the first-type signal by using the second pseudo-random sequence.

Optionally, a length of the pseudo-random sequence is related to a number of optical network units in the optical network unit groups.

Optionally, performing the carrier modulation on the first-type signal obtained after the spectrum spreading by using the carrier corresponding to the second frequency in the first frequency band includes: acquiring a second sub-frequency band allocated for the optical network unit groups in which the target optical network unit is located on the first carrier frequency band; and performing the carrier modulation on the first-type signal by using the carrier corresponding to the second frequency on the second sub-frequency band.

Optionally, the second frequency is a central frequency in the second sub-frequency band.

The following aspect is not according to the invention and is present for illustration purpose only: the transmission sub-module is further configured to before converting the first-type signal obtained after the carrier modulation to the optical signal and transmitting the optical signal on the transmission channel, compress a signal amplitude of the first-type signal obtained after the carrier modulation according to a preset compression proportion; and convert the compressed first-type signal into the optical signal transmitted on the transmission channel.

In the embodiment, an OLT of a PON performs spectrum spreading modulation on low-delay data transmitted to multiple ONUs by using a pseudo-random sequence code in a corresponding group; and a length of the pseudo-random sequence code is determined by an index of a third power of N. All low-latency signals obtained after the spectrum spreading are modulated on the low-frequency carrier of a corresponding group of the ONU. All low-latency electrical signals are superposed on primary traffic electrical signals and an amplitude value of the superposed electrical signals is unable to exceed an upper limit value of the ONU receiving the primary traffic.

It is to be noted that the three solutions of the method on the OLT side correspond to the three solutions of the method on the ONU side, and will not be described here again.

From the description of the embodiments described above, it will be apparent to those skilled in the art that the methods in the embodiments described above may be implemented by software plus a necessary general-purpose hardware platform, or may of course be implemented by hardware. However, in many cases, the former is a preferred implementation mode. Based on this understanding, the solution provided by the present application substantially, or the part contributing to the existing art, may be embodied in the form of a software product. The software product is stored on a storage medium (such as a ROM/RAM, a magnetic disk or an optical disk) and includes several instructions for enabling a terminal device (which may be a mobile phone, a computer, a server or a network device) to execute the method according to each embodiment of the present application.

### Embodiment two

An embodiment of the present invention further provides a data transmission device. The apparatus is used for implementing the above-mentioned embodiments and preferred embodiments. What has been described will not be repeated. As used below, the term "module" may be software, hardware or a combination thereof capable of implementing predetermined functions. The apparatus in the embodiment described below is preferably implemented by software, but implementation by hardware or by a combination of software and hardware is also possible and conceived.

FIG. 26 is a schematic diagram of a data transmission device according to an embodiment of the present application. As shown in FIG. 26, the device may include a reception unit 261 (which is also referred to as reception unit 261) and a transmission unit 262 (which is also referred to as transmission unit 262).

The reception unit 261 is configured to acquire a first type of data and a second type of data to be transmitted. A transmission delay allowed by the first type of data is less than a transmission delay allowed by the second type of data.

The transmission unit 262 is configured to transmit the first type of data required to be instantly transmitted on a first carrier frequency band of a transmission channel between a target optical network unit and an optical line terminal, where the transmission channel allows transmitting the first type of data and the second type of data at the same time, and on the transmission channel, a lowest frequency of a second frequency band for transmitting the second type of data is higher than a highest frequency in the first carrier frequency band.

Through the above embodiment, the reception unit acquires the first type of data and the second type of data to be transmitted, where a transmission delay allowed by the first type of data is less than the transmission delay allowed by the second type of data. The transmission unit transmits the first type of data required to be instantly transmitted on the first carrier frequency band of a transmission channel between the target optical network unit and the optical line terminal, where the transmission channel allows transmitting the first type of data and the second type of data at the same time. And on the transmission channel, the lowest frequency of the second frequency band for transmitting the second type of data is higher than the highest frequency in the first carrier frequency band. For the second type of data, the second type of data may be transmitted in an existing mode, and for the first type of data, the first type of data is transmitted in a mode of instant transmission, and two types of data are allowed to be transmitted at the same time, thereby solving the technical problem of a high cost of transmitting data having different delays at the same time in a passive optical network, and implementing the technical performance of reducing transmission cost of the data having different delays in the passive optical network.

In the above embodiment, the transmission unit includes: a determination module, which is configured to determine a first sub-frequency band allocated for the target optical network unit in the first carrier frequency band; a transmission module, which is configured to transmit the first type of data on the first sub-frequency band allocated for the target optical network unit.

Optionally, the transmission module includes: a modulation sub-module, which is configured to perform carrier modulation on a first-type signal for transmitting the first type of data by using a carrier corresponding to a frequency in the first sub-frequency band; and a transmission sub-module, which is configured to convert the first-type signal obtained after the carrier modulation to an optical signal, and transmit the optical signal on the transmission channel.

The following aspect is not according to the invention and is present for illustration purpose only: the transmission sub-module is further configured to before converting the first-type signal obtained after the carrier modulation to the optical signal and transmitting the optical signal on the transmission channel, compress a signal amplitude of the first-type signal obtained after the carrier modulation according to a preset compression proportion; and convert the compressed first-type signal into the optical signal transmitted on the transmission channel.

Optionally, in the first carrier frequency band, each optical network unit in a passive optical network in which the target optical network unit is located is allocated with a frequency sub-band, where bandwidths of any two frequency sub-bands are same, and a frequency spacing is provided between neighboring two frequency sub-bands.

Optionally, the transmission unit includes: a first spectrum spreading module, which is configured to perform spectrum spreading on a first-type signal for transmitting the first type of data; a first modulation module, which is configured to perform carrier modulation on the first-type signal obtained after the spectrum spreading by using a carrier corresponding to a first frequency on the first carrier frequency band, where the first frequency is a frequency used by the first frequency in response to determining that all optical network units in a passive optical network in which the target optical network unit is located perform the carrier modulation; and a first conversion module, which is configured to convert the first-type signal obtained after the carrier modulation to an optical signal, and transmit the optical signal on the transmission channel.

Optionally, the first spectrum spreading module is further configured to acquire a first pseudo-random sequence allocated for the target optical network unit; and perform the spectrum spreading on the first-type signal by using the first pseudo-random sequence. The following aspect is not according to the invention and is present for illustration purpose only: the transmission sub-module is further configured to before converting the first-type signal obtained after the carrier modulation to the optical signal and transmitting the optical signal on the transmission channel, compress a signal amplitude of the first-type signal obtained after the carrier modulation according to a preset compression proportion; and convert the compressed first-type signal into the optical signal transmitted on the transmission channel.

Optionally, a pseudo-random sequence having a same length is allocated to each optical network unit of the passive optical network, where a length of the pseudo-random sequence is related to a number of optical network units in the passive optical network.

Optionally, the transmission unit includes: a second spectrum spreading module, which is configured to perform spectrum spreading on a first-type signal for transmitting the first type of data; a second modulation module, which is configured to perform carrier modulation on the first-type signal obtained after the spectrum spreading by using a carrier corresponding to a second frequency on the first carrier frequency band, where the second frequency is a frequency used by the first frequency in response to determining that all optical network units in optical network unit groups in which the target optical network unit is located perform the carrier modulation; and a second conversion module, which is configured to convert the first-type signal obtained after the carrier modulation to an optical signal, and transmit the optical signal on the transmission channel.

Optionally, the second spectrum spreading module is further configured to before performing the spectrum spreading on the first-type signal for transmitting the first type of data, determine the optical network unit group in which the target optical network unit is located, where a passive optical network in which the target optical network unit is located includes multiple optical network unit groups, and each of the multiple optical network unit groups includes multiple optical network units.

Optionally, when performing the spectrum spreading on the first-type signal for transmitting the first type of data, the second spectrum spreading module firstly acquires multiple pseudo-random sequences allocated for all optical network unit groups in which the target optical network unit is located; acquires a second pseudo-random sequence corresponding to the target optical network unit in the multiple pseudo-random sequences; and performs the spectrum spreading on the first-type signal by using the second pseudo-random sequence.

A length of the pseudo-random sequence is related to a number of optical network units in the optical network unit groups.

The second modulation module is further configured to acquire a second sub-frequency band allocated for the optical network unit groups in which the target optical network unit is located on the first carrier frequency band; and perform the carrier modulation on the first-type signal by using the carrier corresponding to the second frequency on the second sub-frequency band. The second frequency is a central frequency in the second sub-frequency band.

The transmission sub-module is further configured to before converting the first-type signal obtained after the carrier modulation to the optical signal and transmitting the optical signal on the transmission channel, compress a signal amplitude of the first-type signal obtained after the carrier modulation according to a preset compression proportion; and convert the compressed first-type signal into the optical signal transmitted on the transmission channel.

It is to be noted that the various modules described above may be implemented by software or hardware. Implementation by hardware may, but may not necessarily, be performed in the following manners: the various modules described above are located in a same processor, or the various modules described above are located in their respective processors in any combination form.

### Embodiment three

This embodiment further provides a storage medium. Optionally, in this embodiment, the storage medium may be configured to store program codes for performing steps described below.

In S11, a first type of data and a second type of data to be transmitted are acquired. A transmission delay allowed by the first type of data is less than a transmission delay allowed by the second type of data.

In S12, the first type of data required to be instantly transmitted is transmitted on a first carrier frequency band of a transmission channel between a target optical network unit and an optical line terminal. The transmission channel allows transmitting the first type of data and the second type of data at the same time, and on the transmission channel, a lowest frequency of a second frequency band for transmitting the second type of data is higher than a highest frequency in the first carrier frequency band.

Optionally, in this embodiment, the storage medium may include, but is not limited to, a USB flash disk, a read-only memory (ROM), a random access memory (RAM), a mobile hard disk, a magnetic disk, an optical disk or another medium capable of storing program codes.

Optionally, in this embodiment, a processor executes according to the stored program codes in the storage medium: acquiring a first type of data and a second type of data to be transmitted, where a transmission delay allowed by the first type of data is less than a transmission delay allowed by the second type of data; transmitting the first type of data required to be instantly transmitted on a first carrier frequency band of a transmission channel between a target optical network unit and an optical line terminal, where the transmission channel allows transmitting the first type of data and the second type of data at the same time, and on the transmission channel, a lowest frequency of a second frequency band for transmitting the second type of data is higher than a highest frequency in the first carrier frequency band.

Optionally, for specific examples in this embodiment, reference may be made to the examples described in the above-mentioned embodiments and optional embodiments, and repetition will not be made in this embodiment.

Apparently, it should be understood by those skilled in the art that each of the above-mentioned modules or steps of the present application may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatus, so that the modules or steps may be stored in a storage apparatus and executed by the computing apparatus. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present application is not limited to any specific combination of hardware and software.

## Claims

1. A data transmission method, carried out by a target optical network unit, ONU, or by an optical line terminal, OLT, comprising the steps of: acquiring (S301) a first type of data and a second type of data to be transmitted, wherein the first type of data is low-delay requirement data and a transmission requirement delay of the first type of data is less than a transmission delay requirement of the second type of data; and transmitting (S302) the first type of data on a first carrier frequency band of a transmission channel between the target ONU and the OLT, and transmitting the second type of data on a second carrier frequency band of the transmission channel; wherein a lowest frequency of the second carrier frequency band is higher than a highest frequency in the first carrier frequency band.

2. The method of claim 1, wherein the transmitting (S302) the first type of data on the first carrier frequency band of the transmission channel between the target ONU and the OLT comprises:
determining a first sub-frequency band allocated to the target ONU in the first carrier frequency band; and
transmitting the first type of data on the first sub-frequency band allocated to the target ONU.

3. The method of claim 2, wherein the transmitting the first type of data on the first sub-frequency band allocated to the target ONU comprises:
performing, by using a carrier corresponding to a frequency in the first sub-frequency band, carrier modulation on a first-type signal for transmitting the first type of data; and
converting the first-type signal obtained after the carrier modulation to an optical signal, and transmitting the optical signal on the transmission channel.

4. The method of claim 3, wherein the performing, by using the carrier corresponding to the frequency in the first sub-frequency band, the carrier modulation on the first-type signal for transmitting the first type of data comprises:
determining a central frequency in the first sub-frequency band allocated to the target ONU; and
performing the carrier modulation on the first-type signal by using the carrier corresponding to the central frequency.

5. The method of any one of claims 1 to 4, wherein in the first carrier frequency band, each of ONUs in a passive optical network in which the target ONU is located is allocated a frequency sub-band, wherein bandwidths of any two frequency sub-bands are same, and a frequency spacing is provided between two adjacent frequency sub-bands.

6. The method of claim 1, wherein the transmitting the first type of data on the first carrier frequency band of the transmission channel between the target ONU and the OLT comprises:
performing spectrum spreading on a first-type signal for transmitting the first type of data;
performing, by using a carrier corresponding to a first frequency on the first carrier frequency band, carrier modulation on the first-type signal obtained after the spectrum spreading, wherein the first frequency is used for performing the carrier modulation on all ONUs in a passive optical network in which the target ONU is located; and
converting the first type-type signal obtained after the carrier modulation to an optical signal, and transmitting the optical signal on the transmission channel.

7. The method of claim 6, wherein the performing the spectrum spreading on the first-type signal for transmitting the first type of data comprises:
acquiring a first pseudo-random sequence allocated to the target ONU; and
performing the spectrum spreading on the first-type signal by using the first pseudo-random sequence.

8. The method of claim 6, wherein the converting the first-type signal obtained after the carrier modulation to the optical signal comprises:
Compressing, according to a preset compression proportion, a signal amplitude of the first-type signal obtained after the carrier modulation; and
converting the compressed first-type signal into the optical signal transmitted on the transmission channel.

9. The method of any one of claims 6 to 8, wherein each of the all ONUs in the passive optical network is allocated a pseudo-random sequence having a same length, wherein the length of the pseudo-random sequence is related to a number of the ONUs in the passive optical network.

10. The method of claim 1, wherein the transmitting the first type of data on the first carrier frequency band of the transmission channel between the target ONU and OLT comprises:
performing spectrum spreading on a first-type signal for transmitting the first type of data;
performing, by using a carrier corresponding to a second frequency on the first carrier frequency band, carrier modulation on the first-type signal obtained after the spectrum spreading, wherein the second frequency is used for performing the carrier modulation on all ONUs in an ONU group in which the target ONU is located; and
converting the first-type signal obtained after the carrier modulation to an optical signal, and transmitting the optical signal on the transmission channel.

11. The method of claim 10, wherein before the performing the spectrum spreading on the first-type signal for transmitting the first type of data, the method further comprises:
determining the ONU group in which the target ONU is located; wherein a passive optical network in which the target ONU is located comprises a plurality of ONU groups, and each of the plurality of ONU groups comprises a plurality of ONUs.

12. The method of claim 11, wherein the performing the spectrum spreading on the first-type signal for transmitting the first type of data comprises:
acquiring a plurality of pseudo-random sequences allocated for the ONU group in which the target ONU is located;
acquiring a second pseudo-random sequence corresponding to the target ONU in the plurality of pseudo-random sequences; and
performing the spectrum spreading on the first-type signal by using the second pseudo-random sequence.

13. The method of claim 11, wherein the performing, by using the carrier corresponding to the second frequency in the first frequency band, the carrier modulation on the first-type signal obtained after the spectrum spreading comprises:
acquiring on the first carrier frequency band, a second sub-frequency band allocated for the ONU group in which the target ONU is located; and
performing the carrier modulation on the first-type signal by using the carrier corresponding to the second frequency on the second sub-frequency band.

14. A data transmission apparatus, configured to be operable in a target optical network unit, ONU, or in an optical line terminal, OLT, comprising:
a reception unit (261), which is configured to acquire a first type of data and a second type of data to be transmitted, wherein the first type of data is low-delay requirement data and a transmission delay requirement of the first type of data is less than a transmission delay requirement of the second type of data; and
a transmission unit (262), which is configured to transmit the first type of data on a first carrier frequency band of a transmission channel between the target ONU and the OLT and transmit the second type of data on a second carrier frequency band of the transmission channel, wherein a lowest frequency of the second carrier frequency band is higher than a highest frequency in the first carrier frequency band.

15. A computer-readable medium comprising instructions which, when executed by a computer, cause the computer to carry out the steps of the data transmission method of any one of claims 1 to 13.

## Patentansprüche

1. Datenübertragungsverfahren, das von einer optischen Zielnetzwerkeinheit, ONU oder von einem optischen Leitungsterminal, OLT ausgeführt wird und die folgenden Schritte umfasst: erfassen (S301) einer ersten Art von Daten und einer zweiten Art von zu übertragenden Daten, wobei es sich bei der ersten Art von Daten um Daten mit geringer Verzögerungsanforderung handelt und eine Übertragungsanforderungsverzögerung der ersten Art von Daten geringer ist als eine Übertragungsverzögerungsanforderung von die zweite Art von Daten; und übertragen (S302) des ersten Datentyps auf einem ersten Trägerfrequenzband eines Übertragungskanals zwischen der Ziel-ONU und dem OLT, und übertragen des zweiten Datentyps auf einem zweiten Trägerfrequenzband des Übertragungskanals; wobei eine niedrigste Frequenz des zweiten Trägerfrequenzbandes höher ist als eine höchste Frequenz im ersten Trägerfrequenzband.

2. Verfahren nach Anspruch 1, wobei das Übertragen (S302) des ersten Datentyps auf dem ersten Trägerfrequenzband des Übertragungskanals zwischen der Ziel-ONU und dem OLT umfasst: bestimmen eines ersten Unterfrequenzbands, das der Ziel-ONU im ersten Trägerfrequenzband zugewiesen ist; und senden des ersten Datentyps auf dem ersten Subfrequenzband, das der Ziel-ONU zugewiesen ist.

3. Verfahren nach Anspruch 2, wobei das Senden des ersten Datentyps auf dem ersten Unterfrequenzband, das der Ziel-ONU zugewiesen ist, Folgendes umfasst: durchführen einer Trägermodulation an einem Signal ersten Typs zum Übertragen des ersten Datentyps unter Verwendung eines Trägers, der einer Frequenz im ersten Unterfrequenzband entspricht; und umwandeln des nach der Trägermodulation erhaltenen Signals erster Art in ein optisches Signal und Übertragen des optischen Signals auf dem Übertragungskanal.

4. Verfahren nach Anspruch 3, wobei das Durchführen der Trägermodulation auf dem Signal des ersten Typs zum Übertragen des ersten Datentyps unter Verwendung des Trägers, der der Frequenz im ersten Unterfrequenzband entspricht, Folgendes umfasst: bestimmen einer zentralen Frequenz im ersten Teilfrequenzband, das der Ziel-ONU zugewiesen ist; und Durchführen der Trägermodulation an dem Signal erster Art unter Verwendung des Trägers, der der Zentralfrequenz entspricht.

5. Verfahren nach einem der Ansprüche 1 bis 4, wobei im ersten Trägerfrequenzband jeder ONU in einem passiven optischen Netzwerk, in dem sich die Ziel-ONU befindet, ein Frequenzunterband zugewiesen wird, wobei Bandbreiten von zwei beliebigen Frequenzteilbändern gleich sind und ein Frequenzabstand zwischen zwei benachbarten Frequenzteilbändern vorgesehen ist.

6. Verfahren nach Anspruch 1, wobei das Übertragen des ersten Datentyps auf dem ersten Trägerfrequenzband des Übertragungskanals zwischen der Ziel-ONU und dem OLT Folgendes umfasst: durchführen einer Spektrumspreizung an einem Signal des ersten Typs zum Übertragen des ersten Datentyps; durchführen einer Trägermodulation an dem nach der Spektrumspreizung erhaltenen Signal des ersten Typs unter Verwendung eines Trägers, der einer ersten Frequenz im ersten Trägerfrequenzband entspricht, wobei die erste Frequenz zum Durchführen der Trägermodulation an allen ONUs in einem passiven optischen Gerät verwendet wird Netzwerk, in dem sich die Ziel-ONU befindet; und umwandeln des nach der Trägermodulation erhaltenen Signals vom ersten Typ in ein optisches Signal und Übertragen des optischen Signals auf dem Übertragungskanal.

7. Verfahren nach Anspruch 6, wobei das Durchführen der Spektrumspreizung an dem Signal des ersten Typs zum Übertragen des ersten Datentyps Folgendes umfasst: erfassen einer ersten Pseudozufallssequenz, die der Ziel-ONU zugeordnet ist; und durchführen der Spektrumspreizung am Signal erster Art unter Verwendung der ersten Pseudozufallssequenz.

8. Verfahren nach Anspruch 6, wobei das Umwandeln des nach der Trägermodulation erhaltenen Signals erster Art in das optische Signal Folgendes umfasst: Komprimieren einer Signalamplitude des nach der Trägermodulation erhaltenen Signals erster Art gemäß einem voreingestellten Komprimierungsverhältnis; und umwandeln des komprimierten Signals erster Art in das auf dem Übertragungskanal übertragene optische Signal.

9. Verfahren nach einem der Ansprüche 6 bis 8, wobei allen ONUs im passiven optischen Netzwerk eine Pseudozufallsfolge mit derselben Länge zugewiesen wird, wobei die Länge der Pseudozufallsfolge auf eine Zahl bezogen ist, der ONUs im passiven optischen Netzwerk.

10. Verfahren nach Anspruch 1, wobei das Übertragen des ersten Datentyps auf dem ersten Trägerfrequenzband des Übertragungskanals zwischen der Ziel-ONU und dem OLT Folgendes umfasst: durchführen einer Spektrumspreizung an einem Signal des ersten Typs zum Übertragen des ersten Datentyps; Durchführen einer Trägermodulation an dem nach der Spektrumspreizung erhaltenen Signal des ersten Typs unter Verwendung eines Trägers, der einer zweiten Frequenz im ersten Trägerfrequenzband entspricht, wobei die zweite Frequenz zum Durchführen der Trägermodulation an allen ONUs in einer ONU-Gruppe verwendet wird in dem sich die Ziel-ONU befindet; und umwandeln des nach der Trägermodulation erhaltenen Signals erster Art in ein optisches Signal und Übertragen des optischen Signals auf dem Übertragungskanal.

11. Verfahren nach Anspruch 10, wobei das Verfahren vor dem Durchführen der Spektrumspreizung an dem Signal des ersten Typs zum Übertragen des ersten Datentyps weiterhin Folgendes umfasst: Bestimmen der ONU-Gruppe, in der sich die Ziel-ONU befindet; wobei ein passives optisches Netzwerk, in dem sich die Ziel-ONU befindet, mehrere ONU-Gruppen umfasst und jede der mehreren ONU-Gruppen mehrere ONUs umfasst.

12. Verfahren nach Anspruch 11, wobei das Durchführen der Spektrumspreizung am Signal des ersten Typs zum Übertragen des ersten Datentyps Folgendes umfasst: erfassen einer Vielzahl von Pseudozufallssequenzen, die der ONU-Gruppe zugeordnet sind, in der sich die Ziel-ONU befindet; erfassen einer zweiten Pseudozufallssequenz, die der Ziel-ONU in der Mehrzahl von Pseudozufallssequenzen entspricht; und durchführen der Spektrumspreizung am Signal des ersten Typs unter Verwendung der zweiten Pseudozufallssequenz.

13. Verfahren nach Anspruch 11, wobei das Durchführen der Trägermodulation auf dem nach der Spektrumspreizung erhaltenen Signal ersten Typs unter Verwendung des Trägers, der der zweiten Frequenz im ersten Frequenzband entspricht, Folgendes umfasst: erfassen eines zweiten Unterfrequenzbands, das der ONU-Gruppe zugeordnet ist, in der sich die Ziel-ONU befindet, auf dem ersten Trägerfrequenzband; und durchführen der Trägermodulation am Signal des ersten Typs unter Verwendung des Trägers, der der zweiten Frequenz im zweiten Unterfrequenzband entspricht.

14. Datenübertragungsvorrichtung, die so konfiguriert ist, dass sie in einer optischen Zielnetzwerkeinheit, ONU, oder in einem optischen Leitungsterminal, OLT, betrieben werden kann, umfassend: eine Empfangseinheit (261), die zum Erfassen einer ersten Art von Daten und einer zweiten Art von zu übertragenden Daten konfiguriert ist, wobei die erste Art von Daten Daten mit geringer Verzögerungsanforderung und eine Übertragungsverzögerungsanforderung der ersten Art von Daten sind ist kleiner als eine Übertragungsverzögerungsanforderung des zweiten Datentyps; und eine Übertragungseinheit (262), die dazu konfiguriert ist, die erste Art von Daten auf einem ersten Trägerfrequenzband eines Übertragungskanals zwischen der Ziel-ONU und dem OLT zu übertragen und die zweite Art von Daten auf einem zweiten Trägerfrequenzband der Übertragung zu übertragen Kanal, wobei eine niedrigste Frequenz des zweiten Trägerfrequenzbandes höher ist als eine höchste Frequenz im ersten Trägerfrequenzband.

15. Computerlesbares Medium, das Anweisungen umfasst, die, wenn sie von einem Computer ausgeführt werden, den Computer veranlassen, die Schritte des Datenübertragungsverfahrens nach einem der Ansprüche 1 bis 13 auszuführen.

## Revendications

1. Une méthode de transmission de données, exécutée par une unité de réseau optique cible, ONU, ou par un terminal de ligne optique, OLT, comprenant les étapes suivantes: l'acquisition (S301) d'un premier type de données et un second type de données à transmettre, le premier type de données étant des données à faible délai et un délai de transmission du premier type de données est inférieur à un délai de transmission du deuxième type de données; et de transmission du deuxième type de données; et la transmission (S302) du premier type de données sur une première bande de fréquences porteuses d'un canal de transmission entre l'ONU cible et l'OLT, et en transmettant le deuxième type de données sur une deuxième bande de fréquence porteuse du canal de transmission; la fréquence la plus basse de la seconde bande de fréquence porteuse étant supérieure à la fréquence la plus élevée de la première bande de fréquence porteuse.

2. Le procédé de la revendication 1, dans lequel la transmission (S302) du premier type de données sur la première bande de fréquence porteuse du canal de transmission entre l'ONU cible et l'OLT comprend: la détermination d'une première bande de sous-fréquences attribuée à l'ONU cible dans la première bande de fréquences porteuse; et transmettre le premier type de données sur la première bande de sous-fréquences attribuée à l'ONU cible.

3. Une méthode de la revendication 2, dans laquelle la transmission du premier type de données sur la première bande de sous-fréquences attribuée à l'ONU cible comprend: l'exécution, en utilisant une porteuse correspondant à une fréquence dans la première bande de sous-fréquences, une modulation de porteuse sur un signal de premier type pour transmettre le premier type de données; et la conversion du signal de premier type obtenu après la modulation de la porteuse en un signal optique, et transmettre le signal optique sur le canal de transmission.

4. Un procédé de la revendication 3, dans lequel l'exécution en utilisant l'opérateur correspondant à la fréquence dans la première bande de sous-fréquence, de la modulation porteuse sur le signal de premier type pour transmettre le premier type de données comprend: la détermination d'une fréquence centrale dans la première bande de sous-fréquences attribuée à l'ONU cible; et effectuer la modulation porteuse sur le signal de premier type en utilisant l'opérateur correspondant à la fréquence centrale.

5. Une méthode décrite dans l'une des revendications 1 à 4, dans laquelle, dans la première bande de fréquences porteuse, chaque ONU d'un réseau optique passif dans lequel se trouve l'ONU cible se voit attribuer une sous-bande de fréquences, dans laquelle les largeurs de bande de deux sous-bandes de fréquences sont identiques, et un espacement de fréquences est prévu entre deux sous-bandes de fréquences adjacentes.

6. Une méthode de la revendication 1, dans laquelle la transmission du premier type de données sur la première bande de fréquence porteuse du canal de transmission entre l'ONU cible et l'OLT comprend: l'exécution d'un étalement de spectre sur un signal de premier type pour transmettre le premier type de données; l'exécution, en utilisant une porteuse correspondant à une première fréquence sur la première bande de fréquences porteuse, une modulation de porteuse sur le signal de premier type obtenu après l'étalement du spectre, la première fréquence étant utilisée pour effectuer la modulation de porteuse sur tous les ONU d'un réseau optique passif dans lequel se trouve l'ONU cible; et la conversion du premier signal de type obtenu après la modulation de la porteuse en un signal optique, et transmettre le signal optique sur le canal de transmission.

7. Un procédé de la revendication 6, dans lequel l'étalement du spectre sur le signal de premier type pour la transmission du premier type de données comprend: l'acquisition d'une première séquence pseudoaléatoire attribuée à l'ONU cible; et l'exécution de l'étalement du spectre sur le signal de premier type en utilisant la première séquence pseudoaléatoire.

8. Le procédé de la revendication 6, dans lequel la conversion du signal de premier type obtenu après la modulation de la porteuse en signal optique comprend: la compression, selon une proportion de compression prédéfinie, d'une amplitude de signal du signal de premier type obtenu après la modulation de la porteuse; et la conversion du signal comprimé de premier type en signal optique transmis sur le canal de transmission.

9. Une méthode décrite dans l'une des revendications 6 à 8, dans laquelle chaque ONU du réseau optique passif se voit attribuer une séquence pseudoaléatoire de même longueur, la longueur de la séquence pseudoaléatoire étant liée au nombre d'ONU du réseau optique passif.

10. La méthode de la revendication 1, dans laquelle la transmission du premier type de données sur la première bande de fréquence porteuse du canal de transmission entre l'ONU cible et l'OLT comprend: l'exécution d'un étalement de spectre sur un signal de premier type pour transmettre le premier type de données; l'exécution, en utilisant une porteuse correspondant à une seconde fréquence sur la première bande de fréquences porteuse, une modulation de porteuse sur le signal de premier type obtenu après l'étalement de spectre, la seconde fréquence étant utilisée pour effectuer la modulation de porteuse sur tous les ONU d'un groupe d'ONU dans lequel se trouve l'ONU cible; et la conversion du signal de premier type obtenu après la modulation de la porteuse en un signal optique, et transmettre le signal optique sur le canal de transmission.

11. Une méthode de la revendication 10, dans laquelle, avant d'effectuer l'étalement du spectre sur le signal de premier type pour transmettre le premier type de données, la méthode comprend en outre: la détermination du groupe d'ONU où se trouve l'ONU cible; dans laquelle un réseau optique passif où se trouve l'ONU cible comprend une pluralité de groupes d'ONU, et chacun de la pluralité de groupes d'ONU comprend une pluralité d'ONU.

12. Une méthode de la revendication 11, dans laquelle l'étalement du spectre sur le signal de premier type pour la transmission du premier type de données comprend: l'acquisition d'une pluralité de séquences pseudoaléatoires attribuées au groupe d'ONU dans lequel se trouve l'ONU cible; l'acquisition d'une deuxième séquence pseudoaléatoire correspondant à l'ONU cible dans la pluralité de séquences pseudoaléatoires; et l'exécution de l'étalement du spectre sur le signal de premier type en utilisant la deuxième séquence pseudoaléatoire.

13. Un procédé de la revendication 11, dans lequel l'exécution, en utilisant la porteuse correspondant à la seconde fréquence dans la première bande de fréquence, de la modulation de porteuse sur le signal de premier type obtenu après l'étalement du spectre comprend: l'acquisition, sur la première bande de fréquences porteuse, une deuxième sous-bande de fréquences attribuée au groupe d'ONU dans lequel se trouve l'ONU cible; et l'exécution de la modulation de porteuse sur le signal de premier type en utilisant la porteuse correspondant à la deuxième fréquence sur la deuxième bande de sous-fréquence.

14. Un appareil de transmission de données, configuré pour fonctionner dans une unité de réseau optique cible, ONU, ou dans un terminal de ligne optique, OLT, comprenant: une unité de réception (261), configurée pour acquérir un premier type de données et un second type de données à transmettre, le premier type de données étant des données à faible délai et un délai de transmission du premier type de données est inférieur à un délai de transmission requis pour le second type de données; et une unité de transmission (262), configurée pour transmettre le premier type de données sur une première bande de fréquence porteuse d'un canal de transmission entre l'ONU cible et l'OLT et pour transmettre le deuxième type de données sur une deuxième bande de fréquence porteuse du canal de transmission, la fréquence la plus basse de la deuxième bande de fréquence porteuse étant supérieure à la fréquence la plus élevée de la première bande de fréquence porteuse.

15. Un support lisible par ordinateur comprenant des instructions qui, lorsqu'elles sont exécutées par un ordinateur, permettent à ce dernier d'exécuter les étapes de la méthode de transmission de données de l'une des revendications 1 à 13.
